(19) Europäisches Patentamt
European Patent Office
Office européen des brevets

(11) **EP 2 690 286 A1**

(12) **EUROPEAN PATENT APPLICATION**

(43) Date of publication:
**29.01.2014 Bulletin 2014/05**

(51) Int Cl.:
**F03D 11/00** *(2006.01)*  **F03D 7/02** *(2006.01)*

(21) Application number: **12177469.9**

(22) Date of filing: **23.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft 80333 München (DE)**

(72) Inventor: **Laurberg, Hans 8000 Århus C (DK)**

(54) **Monitoring arrangement**

(57) It is described a monitoring arrangement (104, 200) for monitoring movements of components of a wind turbine (100), wherein the wind turbine (100) comprises a nacelle (102) being supported by a tower (101) at the upper end of the tower, a rotor comprising a plurality of wind turbine blades (107), and a hub section (103), at which the rotor is mounted. The monitoring arrangement (104, 200) is arrangeable in the hub section and comprises an accelerometer (204) being adapted to measure a first acceleration of the hub section (103) in a first direction and a second acceleration of the hub section (103) in a second direction, an azimuth angle measuring element (203) being adapted to measure the azimuth angle of the rotor, an estimation unit (201) being adapted to estimate movements, in a direction transversal to a wind direction (106), of components of the wind turbine (100) based on the azimuth angle, the first acceleration and the second acceleration, and a monitoring unit (202) being adapted to monitor the movements of the components of the wind turbine (100) based on a signal received from the estimation unit (201) being indicative for the estimated movements.

FIG 1

EP 2 690 286 A1

**Description**

<u>Field of invention</u>

The present invention relates to the technical field of wind turbines. In particular, the present invention relates to a monitoring arrangement for a wind turbine, in particular monitoring transversal movements of components of the wind turbine.

<u>Art Background</u>

During operation, wind turbines may experience different movements or accelerations/strains. These movements may be caused by for instance by wind or gravity or any other influences to the wind turbine.

In order to protect a wind turbine from extreme movements, i.e., to have a chance to react and counteract such movements, the movements of components of the wind turbine should be monitored. In particular for monitoring the movements of the nacelle, axial and transversal movements should be monitored. Common monitoring systems are arranged in the nacelle directly. However, it may be desirable to have a monitoring device directly in the hub in order to have direct access to the stopping mechanism of the turbine, e.g., which is located in the hub.

WO 2010139613 A2 discloses a wind turbine comprising a hub-sited control circuitry arranged in a hub section of the wind turbine, the hub section supporting the rotor blades. A measurement unit is provided in the hub section for determining at least one parameter, such as an acceleration of a component of the wind turbine, a load of a component of the wind turbine, or a rotational speed of the rotor or the turbine shaft. The hub-sited control circuitry is configured to determine a load, acceleration, velocity or deflection of the tower or a wind turbine blade on the basis of the at least one parameter measured by the measurement unit, and to control the wind turbine on the basis of the determined load, deflection, velocity, or acceleration of the tower or blade and a desired value for said load, deflection, velocity or acceleration. However, this arrangement does not describe how to monitor a transversal movement of the nacelle.

Therefore, there may be a need for an efficient and reliable monitoring of transversal movements of components of a wind turbine.

<u>Summary of the Invention</u>

This need may be met by the subject matter according to the independent claims. Advantageous embodiments of the present invention are described by the dependent claims.

According to a first aspect of the invention, there is provided a monitoring arrangement for monitoring movements of components of a wind turbine, wherein the wind turbine comprises a nacelle being supported by a tower at the upper end of the tower, a rotor comprising a plurality of wind turbine blades, and a hub section, at which the rotor is mounted. The monitoring arrangement is arrangeable in the hub section of the wind turbine and comprises an accelerometer being adapted to measure a first acceleration of the hub section in a first direction and a second acceleration of the hub section in a second direction, an azimuth angle measuring element being adapted to measure the (actual) azimuth angle (rotational angle) of the rotor, an estimation unit being adapted to estimate movements, in a direction transversal to a wind direction, of components of the wind turbine based on the azimuth angle, the first acceleration and the second acceleration, and a monitoring unit being adapted to monitor the movements of the components of the wind turbine based on a signal received from the estimation unit being indicative for the estimated movements.

A wind turbine may be used for generating electrical power by converting wind into electrical power. Typically, wind turbines comprise a tower, a wind turbine rotor, which is arranged at a top portion of the tower and which comprises at least one blade, and a generator being mechanically coupled with the wind turbine rotor. Based on an input power, the wind, the generator is able to convert the input power into electrical output power. To allow a proper operation of the wind turbine, movements or accelerations of components of the wind turbine may need to be monitored.

It may be desirable to monitor nacelle or tower movements or accelerations (in the following this may be called nacelle movement). In common systems, strain in the tower and accelerations in the nacelle or tower have been used to do this monitoring. According to specifications for wind turbines, the nacelle movement should be monitored both in the axial (in wind direction) and the transversal (transversely to the wind direction) direction. Moving the monitoring component from the nacelle, where it is located in common systems, to the hub, as it is desired, makes no practical change in the axial direction. However, monitoring the movement in the transversal direction with common systems and monitoring devices is much more complicated.

An accelerometer, which may be used for determining accelerations, rotates in a plane where one direction contains the transversal acceleration (vibrations) and the perpendicular direction is gravity. This may be seen as signal and interference, wherein the transversal acceleration is the signal and the gravity is the interference. Thus, the SIR (signal to interference ratio) may be low when the gravity is much larger than the transversal accelerations, which will typically be the case.

The idea of the herein described monitoring device is to measure accelerations in two directions and to measure the azimuth angle of the rotor (i.e., the rotor shaft angle or rotational angle of the rotor) for determining the acceleration or movement of a component of the wind turbine. By using the acceleration in two directions and the azimuth angle as a factor for transferring the accelerations in two directions at the hub to the nacelle (i.e., as a factor for a tilting of the rotor in respect to the nacelle), a very precise determination of the sideway acceleration or movement of components of the wind turbine may be performed.

According to an embodiment of the invention, the monitoring arrangement is adapted to monitor the movement of the nacelle.

As specified in standards, the nacelle is one component of which movements need to be monitored. This may be done by the monitoring arrangements as described herein. As the monitoring arrangement is located in the hub section (being part of the rotor) and being rotated, a fast reaction or counteraction may be performed, when the estimated movements of the nacelle exceed a predefined threshold. A reaction or counteraction may be for instance stopping the wind turbine or counteracting for instance by changing the pitch angle of the blades.

According to a further embodiment of the invention, the movement of the components in the direction transversal to the wind direction is estimated based on an addition of a multiplication of the first acceleration with a sine function of the azimuth angle and of a multiplication of the second acceleration with a cosine function of the azimuth angle.

This means that a sideway movement of the component, for instance the nacelle, may be estimated based on the equation:

$$a\_side=a\_x*cos(azimuth) + a\_y*sin(azimuth)$$

wherein a_side is the sideway movement/acceleration of the component, a_x and a_y are movements/accelerations measured in the hub section by the accelerometer, and azimuth is the azimuth angle of the rotor.

According to a further embodiment of the invention, the monitoring unit is adapted to monitor the movement of the tower of the wind turbine.

Instead of monitoring movements of the nacelle, movements of the tower may be monitored. In another embodiment, movements of the tower and the nacelle or any other component may be monitored.

According to a further embodiment of the invention, the azimuth angle measuring element is a gyrometer.

The azimuth angle may also be determined by any other component being able to determine the azimuth angle of the rotor. However, the azimuth angle should not be estimated based on the measured accelerations in the first and the second direction as this could fail. For instance, where there is a mass imbalance between the blades that results in a sinusoidal transversal movement, this cannot be disquieted from gravity.

According to a further embodiment of the invention, the accelerometer is a two dimensional accelerometer.

By using such an accelerometer, the accelerations may be measured in two directions without the need for a further component.

The monitoring arrangement may be used, in addition to monitor movements of components of the wind turbine (e.g., tower vibrations), for monitoring the rotational speed which may be done for instance by using accelerometers and a gyrometer.

According to a further embodiment of the invention, the first direction and the second direction are located in the rotating plane.

By using accelerometers being arranged in the hub section (as the whole monitoring arrangement is located in the hub section), a direct access to the main stopping mechanism in the turbine (pitching the turbine blades) may be provided. Thus, the security of the wind turbine may be increased when the components are monitored in the hub section.

According to a further embodiment of the invention, the monitoring unit is further adapted to monitor a rotational speed of the rotor based on the signal received from the estimation unit.

The rotational speed as well as movements or vibrations of components of the wind turbine may be measured by the same element, namely the monitoring arrangement. The measurement results of the movement estimation may be used for the estimation or calculation of the rotational speed.

According to a further aspect of the invention, a wind turbine is provided. The wind turbine comprises a nacelle being supported by a tower at the upper end of the tower, a rotor comprising a plurality of wind turbine blades and being mounted to the tower at a hub section, and the monitoring arrangement as described above.

According to a further aspect of the invention, a method for monitoring movements of components of a wind turbine is provided, wherein the wind turbine comprises a nacelle being supported by a tower at the upper end of the tower, a rotor comprising a plurality of wind turbine blades, and a hub section, at which the rotor is mounted, wherein a monitoring arrangement for monitoring movements of components of a wind turbine is arrangeable in the hub section of the wind turbine. The monitoring method comprises measuring, by an accelerometer, a first acceleration of the hub section in a first direction and a second acceleration of the hub section in a second direction, measuring, by an azimuth angle measuring element, the azimuth angle of the rotor, estimating, by an estimation unit, movements, in a direction transversal to a wind direction, of components of the wind turbine based on the azimuth angle, the first acceleration and the second acceleration, and monitoring, by a monitoring unit, the movements of the components of the wind turbine based on a signal received from the estimation unit being indicative for the estimated movements.

According to a further aspect of the invention, there is provided a computer program for monitoring movements of components of a wind turbine, the computer program, when being executed by a data processor, is adapted for controlling the method as described above.

According to a further aspect of the invention, there is provided a computer-readable medium, in which a computer program for monitoring movements of components of a wind turbine is stored, which computer program, when being executed by a processor, is adapted to carry out or control a method as described above.

As used herein, reference to a computer program is intended to be equivalent to a reference to a program element and/or a computer readable medium containing instructions for  controlling a computer system to coordinate the performance of the above described method.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiments to be described hereinafter and are explained with reference to the examples of embodiment. The invention will be described in more detail hereinafter with reference to examples of embodiment but to which the invention is not limited.

Brief Description of the Drawings

Figure 1 shows a wind turbine comprising a monitoring arrangement according to an embodiment of the present invention.

Figure 2 shows a monitoring arrangement according to a further embodiment of the invention.

Detailed Description

The illustration in the drawing is schematically. It is noted that in different figures, similar or identical elements are provided with the same reference signs.

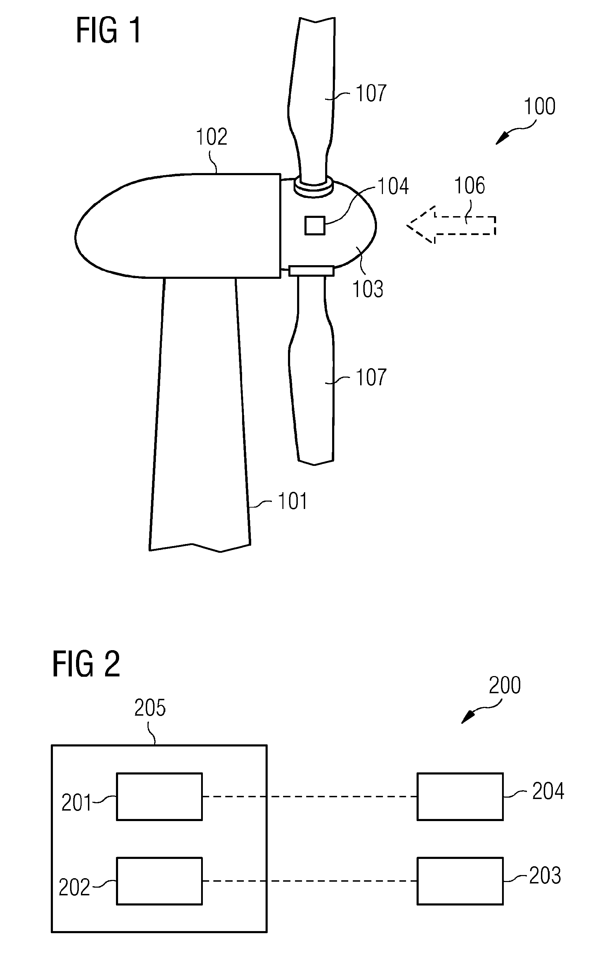

Figure 1 shows a wind turbine 100. The wind turbine 100 comprises a tower 101 and a nacelle 102 at the tower top. The nacelle may house machine components, such as gearbox, generator etc. (not shown). At one end of the nacelle, a hub section 103 supports a plurality of wind turbine blades 107. The rotor of the wind turbine includes the blades and possibly other rotating parts. A monitoring arrangement 104 is arranged within the hub section. The hub, which is part of the rotor, may be arranged outside or inside the nacelle.

The monitoring arrangement 104 may be used for monitoring movements/accelerations/strains (all of which are related) of components of the wind turbine, in particular of the nacelle or the tower.

In Figure 2, the monitoring arrangement 200 is shown in greater detail. The monitoring arrangement 200 comprises an accelerometer 204, an azimuth angle measuring element 203, an estimation unit 201 and a monitoring

EP 2 690 286 A1

unit 202.

The accelerometer 204 is adapted to measure a first acceleration of the hub section in a first direction and a second acceleration of the hub section in a second direction. The azimuth angle measuring element 203 is adapted to measure the azimuth angle of the rotor. The estimation unit 201 is adapted to estimate movements, in a direction transversal to a wind direction (106 in Figure 1), of components of the wind turbine based on the azimuth angle, the first acceleration and the second acceleration. The monitoring unit 202 is adapted to monitor the movements of the components of the wind turbine based on a signal received from the estimation unit being indicative for the estimated movements.

The estimation unit 201 and the monitoring unit 202 may be arranged in a combined unit 205 and may receive signals from the accelerometer 204 and the azimuth angle measurement unit 203. The azimuth angle measurement unit may be for instance a gyrometer.

The accelerometer may be a two dimensional accelerometer for measuring the accelerations in the first and the second direction. The azimuth angle and the accelerations in the first and the second direction may be in the rotating plane. As can be seen, it is possible to make an azimuth estimation that is not influenced by the transversal accelerations (as it is measured by a separate unit, for instance a gyrometer). Thus, the estimating and monitoring of movements of the tower and the nacelle can be made very precise.

It should be noted that the terms movement, acceleration and strain are used herein as terms which are dependent on each other. Thus, when monitoring or estimating a movement, also an acceleration or strains may be estimated and monitored, and vice versa.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1.  A monitoring arrangement (104, 200) for monitoring movements of components of a wind turbine (100), wherein the wind turbine (100) comprises a nacelle (102) being supported by a tower (101) at the upper end of the tower, a rotor comprising a plurality of wind turbine blades (107), and a hub section (103), at which the rotor is mounted, the monitoring arrangement (104, 200) being arrangeable in the hub section and comprising

    an accelerometer (204) being adapted to measure a first acceleration of the hub section (103) in a first direction and a second acceleration of the hub section (103) in a second direction,
    an azimuth angle measuring element (203) being adapted to measure the azimuth angle of the rotor,
    an estimation unit (201) being adapted to estimate movements, in a direction transversal to a wind direction (106), of components of the wind turbine (100) based on the azimuth angle, the first acceleration and the second acceleration, and
    a monitoring unit (202) being adapted to monitor the movements of the components of the wind turbine (100) based on a signal received from the estimation unit (201) being indicative for the estimated movements.

2.  The monitoring arrangement (104, 200) as set forth in claim 1, wherein the monitoring unit (202) is adapted to monitor the movement of the nacelle (102).

3.  The monitoring arrangement (104, 200) as set forth in any one of the preceding claims, wherein the movement of the components in the direction transversal to the wind direction (106) is estimated based on an addition of a multiplication of the first acceleration with a sine function of the azimuth angle and of a multiplication of the second acceleration with a cosine function of the azimuth angle.

4.  The monitoring arrangement (104, 200) as set forth in any one of the preceding claims, wherein the monitoring unit (202) is adapted to monitor the movement of the tower (101) of the wind turbine (100).

5.  The monitoring arrangement (104, 200) as set forth in any one of the preceding claims, wherein the azimuth angle measuring element (203) is a gyrometer.

6.  The monitoring arrangement (104, 200) as set forth in any one of the preceding claims, wherein the accelerometer (204) is a two dimensional accelerometer.

7.  The monitoring arrangement (104, 200) as set forth in any one of the preceding claims, wherein the first direction and the second direction are located in the rotating plane.

8. The monitoring arrangement (104, 200) as set forth in any one of the preceding claims, wherein the monitoring unit (202) is further adapted to monitor a rotational speed of the rotor based on the signal received from the estimation unit (201).

9. A wind turbine (100), the wind turbine (100) comprising
a nacelle (102) being supported by a tower (101) at the upper end of the tower (101),
a rotor comprising a plurality of wind turbine blades (107) and being mounted to the tower (101) at a hub section (103), and
the monitoring arrangement (104, 200) as set forth in any one of the preceding claims.

10. A method for monitoring movements of components of a wind turbine (100), wherein the wind turbine (100) comprises a nacelle (102) being supported by a tower (101) at the upper end of the tower (101), a rotor comprising a plurality of wind turbine blades (107), and a hub section (103), at which the rotor is mounted , wherein a monitoring arrangement (104, 200) for monitoring movements of components of the wind turbine (100) is arrangeable in the hub section (103), the method comprising,
measuring, by an accelerometer (204), a first acceleration of the hub section (103) in a first direction and a second acceleration of the hub section (103) in a second direction,
measuring, by an azimuth angle measuring element (203), the azimuth angle of the rotor,
estimating, by an estimation unit (201), movements, in a direction transversal to a wind direction (106), of components of the wind turbine (100) based on the azimuth angle, the first acceleration and the second acceleration, and
monitoring, by a monitoring unit (202), the movements of the components of the wind turbine (100) based on a signal received from the estimation unit (201) being indicative for the estimated movements.

11. A computer program for monitoring movements of components of a wind turbine (100), the computer program, when being executed by a data processor, is adapted for controlling the method as set forth in claim 10.

12. A computer-readable medium, in which a computer program for monitoring movements of components of a wind turbine (100) is stored, which computer program, when being executed by a processor, is adapted to carry out or control a method as set forth in claim 10.

## FIG 1

## FIG 2

Europäisches
Patentamt

European
Patent Office

Office européen
des brevets

**EUROPEAN SEARCH REPORT**

Application Number

EP 12 17 7469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2010/139613 A2 (VESTAS WIND SYS AS [DK]; BENGTSON JOHN [DK]) 9 December 2010 (2010-12-09) * page 4, line 13 - line 33 * * page 9, line 7 - page 10, line 3; figures 3-6 * | 1-12 | INV. F03D11/00 F03D7/02 |
| A | EP 1 835 293 A1 (SIEMENS AG [DE]) 19 September 2007 (2007-09-19) * paragraph [0025] - paragraph [0033]; figures 2,3 * | 1-12 | |
| A | DE 10 2008 003632 A1 (SCHRAM CHRISTIAN [DE]) 16 July 2009 (2009-07-16) * paragraph [0062] - paragraph [0069]; figure 3 * | 1-12 | |
| A | DE 202 21 562 U1 (WOBBEN ALOYS [DE]) 11 May 2006 (2006-05-11) * paragraphs [0023], [0024]; figures * | 1-12 | TECHNICAL FIELDS SEARCHED (IPC) |
| A | EP 2 133 563 A1 (SIEMENS AG [DE]) 16 December 2009 (2009-12-16) * abstract; figures * | 1-12 | F03D |

The present search report has been drawn up for all claims

| Place of search | Date of completion of the search | Examiner |
|---|---|---|
| Munich | 16 May 2013 | Di Renzo, Raffaele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 7469

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2013

| Patent document cited in search report | | Publication date | Patent family member(s) | | Publication date |
|---|---|---|---|---|---|
| WO 2010139613 | A2 | 09-12-2010 | EP | 2438300 A2 | 11-04-2012 |
| | | | WO | 2010139613 A2 | 09-12-2010 |
| EP 1835293 | A1 | 19-09-2007 | CN | 101395479 A | 25-03-2009 |
| | | | DK | 1835293 T3 | 27-09-2010 |
| | | | DK | 1956375 T3 | 14-03-2011 |
| | | | EP | 1835293 A1 | 19-09-2007 |
| | | | EP | 1956375 A1 | 13-08-2008 |
| | | | ES | 2348143 T3 | 30-11-2010 |
| | | | ES | 2355312 T3 | 24-03-2011 |
| | | | US | 2009047130 A1 | 19-02-2009 |
| | | | US | 2012042727 A1 | 23-02-2012 |
| | | | WO | 2007104585 A1 | 20-09-2007 |
| DE 102008003632 | A1 | 16-07-2009 | NONE | | |
| DE 20221562 | U1 | 11-05-2006 | NONE | | |
| EP 2133563 | A1 | 16-12-2009 | CN | 101603823 A | 16-12-2009 |
| | | | EP | 2133563 A1 | 16-12-2009 |
| | | | US | 2010063769 A1 | 11-03-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010139613 A2